# FASCICULE DE BREVET EUROPEEN

(11) **EP 1 999 017 B1**
(45) Date de publication et mention de la délivrance du brevet: **12.08.2009**
(21) Numéro de dépôt: 07731231.2
(22) Date de dépôt: 30.03.2007
(51) Int. Cl.: B64D 11/00

(54) **COMPARTIMENT A BAGAGES, NOTAMMENT COMPARTIMENT CLOS POUR CABINE D'AERONEF**
GEPÄCKRAUM, INSBESONDERE ABGEDICHTETER RAUM FÜR EINE FLUGZEUGKABINE
LUGGAGE COMPARTMENT, PARTICULARLY A SEALED COMPARTMENT FOR AN AIRCRAFT CABIN

(30) Priorité: 30.03.2006 FR 0602737
(43) Date de publication de la demande: 10.12.2008
(73) Titulaire: Airbus SAS, 31707 Blagnac Cedex (FR)
(72) Inventeur: BOCK, Thomas-Mathias, F-31330 Grenade-sur-Garonne (FR)
(74) Mandataire: Hartmann, Jean-Luc
(86) Numéro de dépôt international: PCT/FR2007/000552
(87) Numéro de publication internationale: WO 2007/118981

(56) Documents cités:
- EP-A2- 0 709 712
- EP-A2- 1 114 773
- EP-A2- 1 371 555
- US-A- 5 790 209

## Description

La présente invention concerne un compartiment à bagages, notamment un compartiment clos pour cabine d'aéronef.

Le domaine de la présente invention est le transport de passagers, par exemple dans un aéronef. Au cours d'un voyage, des bagages de voyageurs, en général les bagages de grandes dimensions, sont disposés dans une soute ou similaire tandis que des bagages plus petits et relativement légers peuvent accompagner les voyageurs dans l'espace -appelé souvent cabine ou compartiment selon le mode de transport- dans lequel ils voyagent. Dans cet espace, des compartiments de rangement sont prévus pour ces bagages plus petits, appelés également bagages à main.

Dans un aéronef, le plus souvent, les compartiments pour bagages à main sont disposés en partie haute de la cabine de l'aéronef, sous le plafond de cette cabine et au-dessus des sièges destinés à accueillir les passagers.

Dans les aéronefs, il existe deux grands types de compartiments à bagages tels que décrits précédemment. Il y a d'une part des coffres à bagages et d'autre part des casiers à bagages. Un coffre à bagages est un compartiment fixe par rapport à la cabine de l'aéronef et une porte, généralement pivotante, permet l'ouverture et la fermeture de l'accès au compartiment à bagages. Un casier à bagages présente lui aussi un compartiment destiné à recevoir les bagages et comportant un accès. Ce compartiment est ici un compartiment mobile entre une première position sortie dans laquelle l'accès au compartiment est ouvert, permettant l'introduction et le retrait de bagages, et une position escamotée à l'intérieur du plafond de la cabine de l'aéronef dans laquelle l'accès au compartiment est fermé.

Le document EP-1 371 555 concerne un coffre à bagages pour aéronef muni d'une porte dans laquelle est réalisée, de préférence dans la partie inférieure de la porte, une fenêtre permettant, notamment à un membre d'équipage debout dans un couloir, de voir à l'intérieur de ce coffre. Le document EP-1 114 773 concerne lui aussi un coffre à bagages. Ce dernier comporte une première porte et une seconde porte à l'intérieur du coffre. Cette dernière porte est destinée à éviter la chute d'objets lors de l'ouverture du coffre à bagages et est par exemple réalisée dans un matériau permettant de voir à l'intérieur du coffre à bagages une fois la première porte ouverte.

La présente invention concerne ces deux types de compartiments à bagages et plus généralement tout compartiment à bagages clos. Le problème à l'origine de la présente invention est de pouvoir déterminer si un compartiment à bagages clos est occupé sans avoir à l'ouvrir et/ou de retrouver plus rapidement un bagage dans un espace pour voyageurs sans avoir à ouvrir plusieurs compartiments à bagages. Cette préoccupation va dans le sens d'augmenter le confort des passagers, notamment lorsque les compartiments à bagages sont disposés en hauteur et que leur ouverture est malaisée du fait de leur position.

A cet effet, elle propose un compartiment à bagages clos disposé dans un espace destiné à recevoir des voyageurs dans un véhicule, ce compartiment comportant au moins une paroi le délimitant et visible depuis l'espace voyageurs à l'intérieur duquel il se trouve.

Selon l'invention, ladite paroi comporte au moins une ouverture obturée par un matériau transparent associé à des moyens d'occultation permettant à volonté de voir à travers ladite ouverture ou bien de cacher cette ouverture.

Il est ainsi possible de voir à l'intérieur d'un tel compartiment sans avoir à l'ouvrir. En outre, le compartiment reste clos puisque les ouvertures sont obturées. Aucun objet ne peut alors tomber hors du compartiment lorsque le véhicule est en mouvement. Dans un aéronef, ceci est particulièrement avantageux car il devient alors inutile d'ouvrir tous les compartiments à bagages avant l'embarquement des passagers. Il est possible de vérifier que les compartiments sont vides sans les ouvrir.

Un compartiment selon l'invention permet également à un passager de voir son bagage durant le voyage. Il peut ainsi plus facilement le récupérer au cours ou à la fin du voyage.

Il est aussi possible à souhait de voir à travers l'ouverture réalisée dans la paroi du compartiment ou de cacher cette ouverture. Dans ce dernier cas, les moyens d'occultation sont de préférence tels que le compartiment à bagages présente un aspect uniforme dans la cabine. Il peut s'agir d'un rideau ou d'un volet mobile de la même couleur que l'extérieur du compartiment à bagages de manière à se fondre dans l'environnement.

Selon une forme de réalisation préférée, ces moyens d'occultation comportent une couche de cristaux liquides associée à des moyens pour soumettre cette couche de cristaux liquides à une différence de potentiel électrique, cette couche étant opaque ou translucide selon la différence de potentiel appliquée.

Ladite paroi peut comporter plusieurs ouvertures en forme de fentes espacées sur la longueur de ladite paroi, chacune des fentes étant obturée par un matériau transparent. Ces multiples fentes permettent alors de bien voir ce qui se trouve dans le compartiment à bagages sur toute la longueur de celui-ci.

Pour mieux voir l'intérieur du compartiment à travers les ouvertures prévues, la face intérieure de la paroi comporte avantageusement des moyens d'éclairage de l'intérieur du compartiment. Ces moyens comportent par exemple une feuille électroluminescente.

La face intérieure de la paroi munie d'au moins une ouverture présente de préférence au moins une zone concave, et les ouvertures sont disposées au niveau de cette zone concave. Grâce à la forme concave, les bagages, pour la plupart d'entre eux, ne viennent pas au fond de la zone concave et forment ainsi un "pont" au-dessus de cette zone concave. En plaçant les ouvertures à cet endroit, un espace est laissé libre entre la face intérieure de la paroi et le bagage. Ceci permet de mieux voir à l'intérieur du compartiment à travers les ouvertures. Les moyens d'éclairage, dans la mesure où ils sont prévus, éclairent de préférence dans cette zone.

La présente invention concerne également une cabine d'aéronef et/ou un aéronef, **caractérisés en ce qu**'ils comportent au moins un compartiment à bagages tel que décrit ci-dessus.

Des détails et avantages de la présente invention ressortiront mieux de la description qui suit, faite en référence aux dessins schématiques annexés sur lesquels :
La figure 1 est une vue schématique en coupe transversale d'un compartiment à bagages selon l'invention en position fermée,
La figure 2 montre un élément du compartiment de la figure 1, et
La figure 3 montre en perspective et à échelle réduite une partie du compartiment de la figure 1.

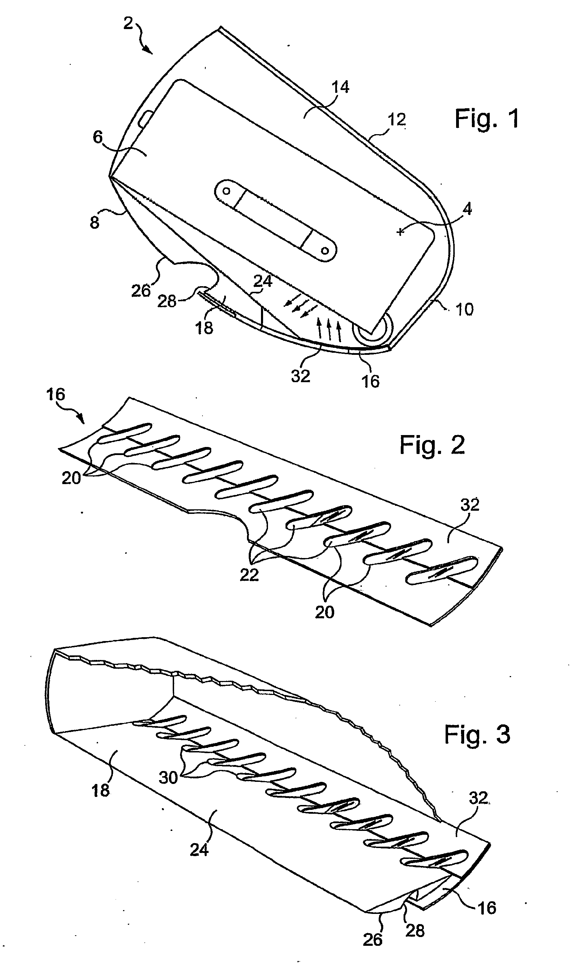

On reconnaît sur les figures 1 et 3 un casier à bagages 2 du type de ceux montés dans une cabine d'aéronef. Il s'agit d'un casier monté pivotant autour d'un axe de pivotement 4, et se trouvant par exemple dans la partie supérieure de cette cabine, au-dessus de sièges de passagers non représentés. Une valise 6 est représentée à l'intérieur de ce compartiment sur la figure 1. L'axe de pivotement 4 est un axe longitudinal par rapport à la cabine de l'aéronef.

Le casier à bagages 2 comporte une paroi inférieure 8, un fond 10, une paroi supérieure 12 et des parois latérales 14. La forme globale de ce casier est sensiblement parallélépipédique avec une face inférieure arrondie. La face opposée au fond 10 est une face entièrement ouverte.

Lorsque le casier à bagages 2 est en position fermée, seule sa paroi inférieure 8 est visible de la cabine dans laquelle il se trouve. En position ouverte, cette paroi inférieure 8 est partiellement cachée et la face opposée au fond 10 est elle aussi visible -et accessible- afin de permettre d'introduire ou de retirer des bagages hors du compartiment à bagages.

La paroi inférieure 8 du casier à bagages 2 comporte deux éléments : un panneau arrière 16 et une partie avant 18.

Le panneau arrière 16 se présente une forme allongée légèrement incurvée le long d'un axe longitudinal. Il est relié au fond 10 du casier à bagages 2. On remarque sur les figures 2 et 3 que ce panneau arrière 16 est muni d'une série de fentes 20 réparties sur toute la longueur du panneau. Chacune de ces fentes 20 réalise une ouverture dans le panneau arrière 16 qui est obturée par une vitre 22 réalisée dans un matériau transparent, de préférence dans une matière synthétique pour éviter tout problème de bris de glace.

Lorsque le casier à bagages 2 est fermé, les fentes 20 forment des fenêtres fixes qui permettent de voir à l'intérieur du casier.

Dans une forme de réalisation préférée, une couche de cristaux liquides recouvre chaque vitre 22 associée à une fente 20. Des moyens pour soumettre cette couche de cristaux liquides à une différence de potentiel électrique sont alors également prévus et cette couche est, selon la différence de potentiel appliquée, opaque ou translucide. De préférence, pour des raisons esthétique, la couleur de cette couche de cristaux liquides, lorsqu'elle- est opaque, correspond à la couleur de la face extérieure du panneau arrière 16. Ainsi depuis l'intérieur de la cabine de l'aéronef le panneau arrière 16 présente un aspect uniforme lorsque les vitres 22 des fentes 20 sont opacifiées.

La partie avant 18 de la paroi inférieure 8 est une pièce profilée qui vient chevaucher le panneau arrière 16. La face intérieure 24 de la partie avant 18 est sensiblement plane. La face extérieure 26 de la partie avant 18 est quant à elle de forme globalement cylindrique et reprend la courbure du panneau arrière 16, autorisant ainsi un bon assemblage des deux éléments pour former la paroi inférieure 8. La face extérieure 26 de la partie avant présente une rainure 28 qui peut être utilisée comme poignée pour ouvrir et fermer le casier à bagages 2.

La partie avant 18, dans la forme de réalisation représentée aux dessins, chevauche la zone du panneau arrière 16 dans laquelle sont réalisées les fentes 20. Des échancrures 30 sont alors prévues dans le bord correspondant de la partie avant 18 de manière à ce que la partie avant 18 ne recouvre pas les fentes 20 du panneau arrière 16.

Les fentes 20 permettent de voir l'intérieur du casier à bagages 2, même lorsque celui-ci est fermé, dans la mesure où les vitres 22 ne sont pas occultées par les cristaux liquides. Pour permettre de mieux voir à l'intérieur du casier à bagages 2 en position fermée, une variante de réalisation avantageuse prévoit que des moyens d'éclairage sont prévus à l'intérieur du casier.

Dans une forme de réalisation préférée, ces moyens d'éclairage comportent une feuille- électroluminescente 32. Il s'agit d'une feuille de faible épaisseur (de l'ordre du millimètre) qui s'allume sous l'effet d'une impulsion électrique. Ce moyen d'éclairage présente l'avantage d'une part d'être d'un encombrement réduit et d'autre part de ne pas -ou peu- provoquer d'échauffement. Cette feuille recouvre par exemple la partie du panneau arrière 16 qui n'est pas recouverte par la partie avant 18. Bien entendu, cette feuille électroluminescente 32 ne recouvre pas les fentes 20. Ainsi, cette feuille se trouve du côté du fond 10 du casier à bagages 2. Une telle feuille électroluminescente 32, ou un autre moyen d'éclairage, pourrait également prendre place par exemple sur la face intérieure 24 de la partie avant 18 de la paroi inférieure 8 ou sur la face intérieure du fond 10.

Comme il ressort clairement de ce qui précède, il est possible de voir dans un casier à bagages 2 selon l'invention sans avoir à l'ouvrir. Ainsi, lors de l'embarquement des passagers dans un aéronef, il n'est pas nécessaire d'ouvrir tous les compartiments à bagages pour contrôler qu'ils sont vides. De même, lors du débarquement des passagers, ou bien au cours d'un vol, si un passager recherche son bagage à main, il lui est facile de voir dans quel compartiment à bagages se trouve son bagage. Il est alors inutile d'ouvrir un compartiment pour s'apercevoir que son bagage ne s'y trouve pas.

Le fonctionnement des cristaux liquides décrits plus haut et qui permettent d'opacifier les vitres peut être laissé au choix des compagnies aériennes. On peut par exemple prévoir que les vitres sont opacifiées lorsque le casier est en position ouverte. La nuit, lorsque l'éclairage intérieur de la cabine est éteint, on peut également prévoir d'opacifier les vitres des fentes des casiers à bagages. En effet, la plupart des voyageurs dorment et n'ont donc pas besoin d'accéder à leurs bagages.

Les moyens d'éclairage à l'intérieur du casier à bagages peuvent être allumés dès que le casier est fermé et que les vitres des ouvertures réalisées dans le compartiment à bagages ne sont pas occultées. Lorsque le compartiment est ouvert, on peut supposer en effet qu'assez de lumière ambiante provenant de l'éclairage de la cabine éclaire l'intérieur du compartiment et les bagages placés dans celui-ci et qu'il est inutile d'éclairer l'intérieur du compartiment à bagages lorsqu'il est fermé et que les vitres sont rendues opaques par les cristaux liquides (ou d'autres moyens).

Grâce à la forme particulière de la paroi inférieure 8, à l'intérieur du casier à bagages 2, la feuille électroluminescente 32 décrite plus haut éclaire efficacement l'intérieur du casier même lorsque des bagages prennent place dans celui-ci. On remarque en effet sur la figure 1 que la face intérieure de la paroi inférieure 8 vers le fond 10 est de forme concave. Ainsi lorsqu'un objet avec une face sensiblement plane, tel la valise 6 représentée, est mis en place dans le casier, il ne vient pas recouvrir la feuille électroluminescente 32. De ce fait, cette feuille peut efficacement éclairer la face inférieure de la valise 6. Cette dernière est alors parfaitement visible depuis la cabine à travers les fentes 20.

Il est donc avantageux de prévoir tout d'abord une zone concave au niveau de la face intérieure de la paroi inférieure (c'est-à-dire la paroi du compartiment à bagages visible depuis la cabine). Les ouvertures réalisées dans la paroi inférieure se trouvent ensuite de préférence au niveau de cette zone concave. Ainsi les bagages, ou tout du moins la plupart d'entre eux, ne viennent pas reposer directement sur les ouvertures, laissant un espace entre les bagages et l'ouverture. De la sorte, le champ de vision depuis l'extérieur du compartiment à bagages vers l'intérieur de ce compartiment est plus large. Enfin, il est avantageux d'éclairer cet espace libre entre la face intérieure du compartiment à bagages et le bagage. Les moyens d'éclairage, dans la mesure où il y en a, se trouvent eux aussi à proximité de cette zone concave.

La présente invention ne se limite pas à la forme de réalisation préférée décrite ci-dessus à titre d'exemple non limitatif. Elle concerne également toutes les variantes à la portée de l'homme du métier, dans le cadre des revendications ci-après.

## Revendications

1. Compartiment à bagages (2) clos pour être disposé dans un espace destiné à recevoir des voyageurs dans un véhicule, ce compartiment comportant au moins une paroi (8) le délimitant et visible depuis l'espace voyageurs à l'intérieur duquel il se trouve et ladite paroi (8) comportant au moins une ouverture (20) obturée par un matériau transparent (22),
**caractérisé en ce que** l'ouverture (20) obturée par un matériau transparent (22) est associée à des moyens d'occultation permettant à volonté de voir à travers ladite ouverture ou bien de cacher cette ouverture.

2. Compartiment à bagages selon la revendication 1, **caractérisé en ce que** les moyens d'occultation comportent une couche de cristaux liquides associée à des moyens pour soumettre cette couche de cristaux liquides à une différence de potentiel électrique, cette couche étant opaque ou translucide selon la différence de potentiel appliquée.

3. Compartiment à bagages selon l'une des revendications 1 ou 2, **caractérisé en ce que** ladite paroi (8) comporte plusieurs ouvertures (20) en forme de fentes espacées sur la longueur de ladite paroi (8), chacune des fentes (20) étant obturée par un matériau transparent (22).

4. Compartiment à bagages selon l'une des revendications 1 à 3, **caractérisé en ce que** la face intérieure de la paroi (8) comporte des moyens d'éclairage (32) de l'intérieur du compartiment.

5. Compartiment à bagages selon la revendication 4, **caractérisé en ce que** les moyens d'éclairage comportent une feuille électroluminescente (32).

6. Compartiment à bagages selon l'une des revendications 1 à 5, **caractérisé en ce que** la face intérieure de la paroi (8) munie d'au moins une ouverture (20) présente au moins une zone concave, et **en ce que** les ouvertures (20) sont disposées au niveau de cette zone concave.

7. Cabine d'aéronef, **caractérisée en ce qu'**elle comporte au moins un compartiment à bagages (2) selon l'une des revendications 1 à 6.

8. Aéronef, **caractérisé en ce qu'**il comporte au moins un compartiment à bagages (2) selon l'une des revendications 1 à 6.

## Claims

1. Enclosed luggage compartment (2) to be arranged in a space intended to accommodate passengers in a vehicle, this compartment comprising at least one wall (8) delimiting it and visible from the passenger space within which the compartment is located and said wall (8) comprising at least one opening (20) obturated by a transparent material (22),
**characterized in that** the opening (20) obturated by a transparent material (22) is associated with concealing means making it possible as desired to see through said opening or to hide that opening.

2. Luggage compartment according to claim 1, **characterized in that** the concealing means comprise a liquid crystal layer associated with means for subjecting said liquid crystal layer to a difference of electric potential, said layer being opaque or translucent depending on the potential difference applied.

3. Luggage compartment according to one of claims 1 or 2, **characterized in that** the said wall (8) comprises several openings (20) in the form of slits spaced over the length of said wall (8), each of the slits (20) being obturated with a transparent material (22).

4. Luggage compartment according to one of claims 1 to 3, **characterized in that** the inner face of the wall (8) comprises means of illumination (32) for the inside of the compartment.

5. Luggage compartment according to claim 4, **characterized in that** the means of illumination comprise an electroluminescent sheet (32).

6. Luggage compartment according to one of claims 1 to 5, **characterized in that** the inner face of the wall (8) provided with at least one opening (20) has at least one concave zone, and **in that** the openings (20) are arranged in this concave zone.

7. Aircraft cabin, **characterized in that** it comprises at least one luggage compartment (2) according to one of claims 1 to 6.

8. Aircraft, **characterized in that** it comprises at least one luggage compartment (2) according to one of claims 1 to 6.

## Patentansprüche

1. Geschlossenes Gepäckabteil (2) zur Anordnung in einem Raum, der dazu bestimmt ist, Passagiere in einem Fahrzeug aufzunehmen, wobei dieses Abteil mindestens eine es begrenzende Wand (8) umfasst, die von dem Passagierraum aus, in dessen Innerem es sich befindet, sichtbar ist, und die Wand (8) mindestens eine Öffnung (20) umfasst, die durch ein transparentes Material (22) verschlossen ist, **dadurch gekennzeichnet, dass** die durch ein transparentes Material (22) verschlossene Öffnung (20) mit Verdeckungsmitteln kombiniert ist, die es nach Belieben gestatten, durch die Öffnung hindurchzusehen oder diese Öffnung zu verbergen.

2. Gepäckabteil nach Anspruch 1, **dadurch gekennzeichnet, dass** die Verdeckungsmittel eine Flüssigkristallschicht umfassen, die mit Mitteln kombiniert ist, um diese Flüssigkristallschicht einer elektrischen Potentialdifferenz auszusetzen, wobei diese Schicht je nach der angelegten Potentialdifferenz opak oder durchscheinend ist.

3. Gepäckabteil nach Anspruch 1 oder 2, **dadurch gekennzeichnet, dass** die Wand (8) mehrere Öffnungen (20) in Form von Schlitzen umfasst, die auf der Länge der Wand (8) in Abständen angeordnet sind, wobei jeder der Schlitze (20) durch ein transparentes Material (22) verschlossen ist.

4. Gepäckabteil nach einem der Ansprüche 1 bis 3, **dadurch gekennzeichnet, dass** die Innenseite der Wand (8) Mittel (32) zur Beleuchtung des Inneren des Abteils umfasst.

5. Gepäckabteil nach Anspruch 4, **dadurch gekennzeichnet, dass** die Beleuchtungsmittel eine elektrolumineszierende Folie (32) umfassen.

6. Gepäckabteil nach einem der Ansprüche 1 bis 5, **dadurch gekennzeichnet, dass** die Innenseite der Wand (8), die mit mindestens einer Öffnung (20) versehen ist, mindestens eine konkave Zone umfasst und dass die Öffnungen (20) auf Höhe dieser konkaven Zone angeordnet sind.

7. Flugzeugkabine, **dadurch gekennzeichnet, dass** sie mindestens ein Gepäckabteil (2) nach einem der Ansprüche 1 bis 6 umfasst.

8. Flugzeug, **dadurch gekennzeichnet, dass** es mindestens ein Gepäckabteil (2) nach einem der Ansprüche 1 bis 6 umfasst.
